# EUROPEAN PATENT SPECIFICATION

(11) **EP 3 029 805 B1**
(45) Date of publication and mention of the grant of the patent: **26.12.2018**
(21) Application number: 14833040.0
(22) Date of filing: 30.07.2014
(51) Int. Cl.: H02J 13/00, H02J 3/38, G05B 15/02

(54) **ENERGY MANAGEMENT SYSTEM, DISPLAY DEVICE, DISPLAY METHOD, AND PROGRAM**
ENERGIEVERWALTUNGSSYSTEM, ANZEIGEVORRICHTUNG, ANZEIGEVERFAHREN UND PROGRAMM
SYSTÈME DE GESTION D'ÉNERGIE, DISPOSITIF D'AFFICHAGE, PROCÉDÉ D'AFFICHAGE ET PROGRAMME

(30) Priority: 30.07.2013 JP 2013157489
(43) Date of publication of application: 08.06.2016
(73) Proprietor: Mitsubishi Electric Corporation, Tokyo, 100-8310 (JP)
(72) Inventor: MARUYAMA Ichiro, Tokyo 100-8310 (JP); MINEZAWA Satoshi, Tokyo 100-8310 (JP); YABE Masaaki, Tokyo 100-8310 (JP); YOSHIKAWA Toshiaki, Tokyo 100-8310 (JP); YANO Hirotoshi, Tokyo 100-8310 (JP); IIZAWA Daisuke, Tokyo 100-8310 (JP); TANAKA Kenichiro, Tokyo 100-8310 (JP); OGINO Takashi, Tokyo 100-8310 (JP); KOMATSU Masayuki, Tokyo 100-8310 (JP); OGAWA Yuki, Tokyo 100-8310 (JP)
(74) Representative: Pfenning, Meinig & Partner mbB
(86) International application number: PCT/JP2014/070140
(87) International publication number: WO 2015/016288

(56) References cited:
- WO-A1-2009/066740
- WO-A1-2013/069671
- WO-A1-2013/088584
- WO-A1-2013/088584
- JP-A- 2002 189 779
- JP-A- 2004 140 997
- JP-A- 2011 120 428
- JP-A- 2013 106 414
- US-A1- 2012 215 370

## Description

### Technical Field

The present disclosure relates to an energy management system, a display device, a display method and a program.

### Background Art

In recent years there is an urgent need for a response to problems such as global warming and depletion of energy resources, and an emphasis has been placed on approaches with the object of reduction in amounts of CO₂ emissions or reduction in amounts of consumed energy. In this context, for single-family homes as well as multi-resident buildings such as apartment buildings, equipment is progressing for distributed energy generating systems as typified by solar power generation systems.

Although most of the electrical power generated by this type of distributed energy generating system is used by the building on which the electricity generating system is installed, part of the electrical power is sold to an electric power company. Thus a system is proposed, as for example, in Patent Literature 1, in which a comparison between power generated by the power generation system and power supplied from a commercial electrical power system is displayed in order to motivate a housing resident to conserve energy.

According to the system disclosed in Patent Literature 1, a graph bar indicating electrical energy generated by a solar power generation system and a graph bar indicating electrical energy consumed at a residence are displayed adjacent to one another. Thus the housing resident can easily compare the generated electrical energy and the consumed electrical energy.

### Citation List

### Patent Literature

Patent Literature 1: Unexamined Japanese Patent Application Kokai Publication No. 2008-141843

WO 2013/069671A discloses a power management device (100) comprises an acquisition unit (101, ST4) for acquiring information related to power consumption from a plurality of electrical instruments (200), a display unit (103), and a controller (101, ST6) that displays on the display unit information obtained through the acquisition unit relating to the power consumption of the plurality of electrical instruments.

WO 2013/088584A discloses a display terminal 10 which displays information about a power controlling state of an energy management apparatus 20 capable of communicating with a power conditioner 40 connected to a power generation system 50 and a power storage system 60, a connection device 30 connected to the power conditioner 40 and a commercial power supply 100, and a loading apparatus 80 for receiving power via the power conditioner 40.

US 2012/215370A discloses a network system, which includes an advanced metering infrastructure, a communication device, and an energy management system. The advanced metering infrastructure is configured to measure energy supplied from a power supply source. The communication device is configured to communicate energy information related with the energy. The energy management system recognizes the energy information to control driving of an electric product.

### Summary of Invention

### Technical Problem

When promoting energy conservation with respect to electrical power, efficient promotion of energy conservation is thought to be possible by comparison of electrical power consumption of each electric device installed in a residence. However, the comparison of electrical energy consumed by each unit of electrical equipment is not possible for the system disclosed in Patent Literature 1.

Moreover, rather than just controlling electrical power consumption amount, control of consumption amounts of resources such as water and gas is important in order to realize a reduction in energy consumption used by the residence as a whole. However, the system disclosed in Patent Literature 1 only displays information related to electrical power generation and electrical power consumption. Thus the promotion of energy conservation for non-electrical-power energy is difficult.

In consideration of the aforementioned circumstances, the object of the present disclosure is to effectively reduce consumption of energy by devices installed in a residence.

### Solution to Problem

The present invention is as defined in the appended independent claims 1, 9 and 10.

### Advantageous Effects of Invention

According to the present disclosure, results of measurement of electrical power supplied to each of a plurality of electric devices installed in a residence are stored together with positional information of the electric devices. Thus a user can see a consumed amount of electrical power either device-by-device for the electric devices or location-by-location for the installation locations. Thus the user becomes highly aware of energy conservation, and energy consumed by electric devices installed in a residence can be effectively decreased.

### Brief Description of Drawings

FIG. 1 is a block diagram of an energy management system according to an embodiment of the present disclosure;
FIG. 2 is a schematic drawing of a residence in which the energy management system is installed;
FIG. 3 is a system diagram of a commercial electrical power system and electric devices arranged in the residence;
FIG. 4 is a diagram schematically indicating information stored in an auxiliary memory;
FIG. 5 is a diagram indicating an start-up image;
FIG. 6 is a diagram for explanation of touch operation;
FIG. 7 is a diagram showing an image showing an electrical energy consumption device-by-device for electrical devices;
FIG. 8 is a diagram showing a pop-up window;
FIG. 9 is a diagram showing an image including a graph showing change of electrical energy device-by-device for the electrical devices;
FIG. 10 is a diagram showing an image for highlighted display of a touched region;
FIG. 11 is a diagram showing a diagram including a circular graph showing separate electrical energy consumption ;
FIG. 12 is a diagram showing a screen indicating a present electrical power usage state;
FIG. 13 is a diagram showing a screen indicating the present electrical power usage state;
FIG. 14 is a diagram showing a screen indicating the present electrical power usage state;
FIG. 15 is a diagram showing an image expressing an energy conservation target;
FIG. 16 is a diagram showing a pop-up window;
FIG. 17 is a diagram showing an image expressing transitioning of consumed amounts of gas and tap water;
FIG. 18 is a diagram showing an image showing electricity sales results;
FIG. 19 is a diagram for explanation of transitioning of images;
FIG. 20 is a diagram showing configuration of a CT; and
FIG. 21 is a diagram showing a modified embodiment of the energy management system.

### Description of Embodiments

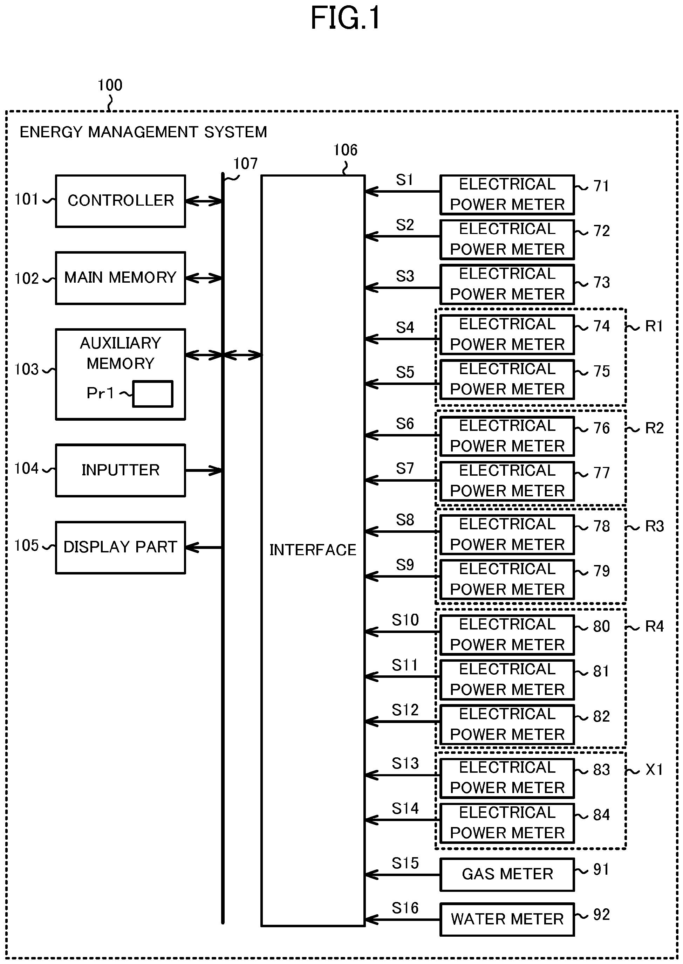

One embodiment of the present disclosure is explained below while referring to figures. FIG. 1 is a block diagram of an energy management system 100. The energy management system 100 is installed in a residence that has an interior partitioned into a plurality of rooms. This energy management system 100 is a system, as typified by systems such as a Home Energy Management System (HEMS), used for monitoring and control of electric devices used in a residence.

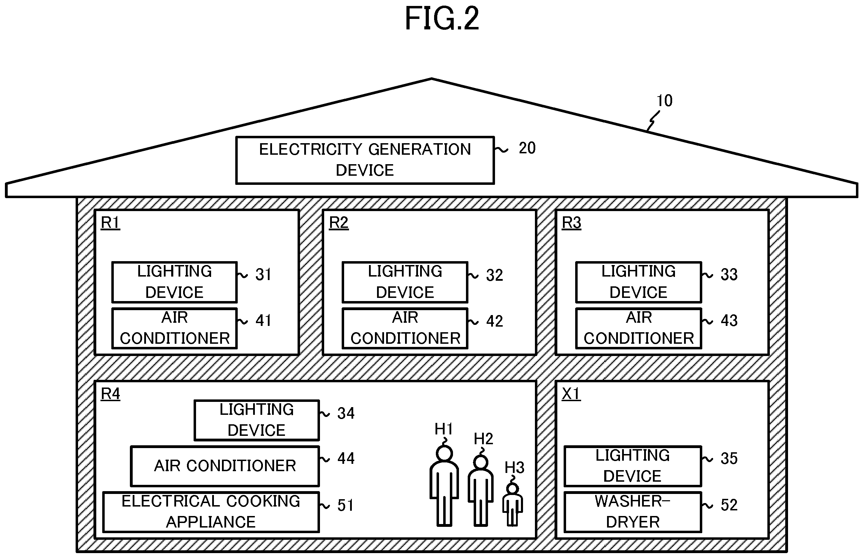

FIG. 2 is a schematic diagram of the residence 10 in which the energy management system 100 is installed. As indicated in FIG. 2, the residence 10, for example, is a single-family house, in which live a father H1, a mother H2 and a child H3. The interior of this residence 10 is partitioned into living-space rooms R1 to R4 and a shared-use room X1. According to the present embodiment, the main user of the living-space room R1 is the father H1, the main user of the living-space room R2 is the mother H2, and the main user of the living-space room R3 is the child H3. The living-space room R4 is a living-space room including a so-called kitchen and living room. This living-space room R4 is used in common by the father H1, the mother H2 and the child H3. Moreover, the shared-use room X1 is a room that includes articles such as a toilet, bath and lavatory.

A lighting device 31 and an air conditioner 41 are arranged in the living-space room R1, a lighting device 32 and an air conditioner 42 are arranged in the living-space room R2, and lighting device 33 and an air conditioner 43 are arranged in the living-space room R3. Also, a lighting device 34, an air conditioner 44 and an electrical cooking appliance 51 are arranged in the living-space room R4, and a lighting device 35 and a washer-dryer 52 are arranged in the shared-use room X1.

An electricity generation device 20 is arranged on the roof of the residence 10. The electricity generation device 20 is a solar power generation device that converts sunlight into electrical energy. This electricity generation device 20 has components such as a solar cell module installed on the roof of the residence 10 and an inverter unit for connection of the solar cell module to an electrical power system of the residence 10.

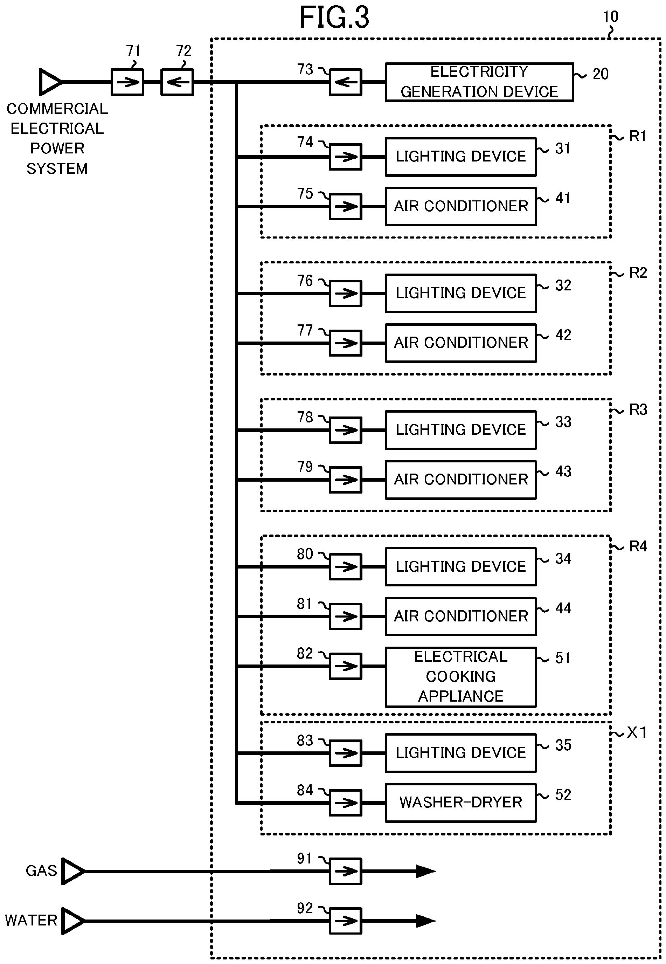

FIG. 3 is a system diagram of a commercial electrical power system and electric devices arranged in the residence 10. As indicated in FIG. 3, the commercial electrical power system is connected in parallel to each of the electricity generation device 20, the lighting devices 31 to 35, the air conditioners 41 to 44, the electrical cooking appliance 51 and the washer-dryer 52.

The energy management system 100 of the present embodiment is an apparatus for displaying to the father H1, the mother H2 and the child H3 as users electrical power such as electrical power consumed by electric devices installed in the residence 10, and electrical power generated by the electricity generation device 20.

As indicated in FIG. 1, the energy management system 100 has a controller 101 for execution of an image generation program Pr1 stored in an auxiliary memory 103, a main memory 102 as a working region for the controller 101, an inputter 104 for receiving a command from a user, a display part 105 for display of various types of information to the user, electrical power meters 71 to 84 connected to an interface 106, a gas meter 91 and a water meter 92 connected to the interface 106, and a system bus 107 connected to each of the aforementioned components.

The controller 101 is a processor for execution of processing according to the image generation program Pr1 stored in the auxiliary memory 103.

The main memory 102 includes memory such as Random Access Memory (RAM). The image generation program Pr1 executed by the controller 101 is deployed in the main memory 102.

The auxiliary memory 103 is a memory device that includes non-volatile memory such as a magnetic disc and semiconductor memory. This auxiliary memory 103 stores the image generation program Pr1 executed by the controller 101. Via the interface 106, the auxiliary memory 103 receives measurement values output from the electrical power meters 71 to 84 for storage as a time series.

The inputter 104 has components such as a touch panel and input keys. The touch panel of the inputter 104 is arranged and superimposed on the display part 105, and together with the display part 105, forms a Graphical User Interface (GUI). A command from the user is input through the inputter 104, passes through the system bus 107, and is sent to the controller 101. The inputter 104, for example, is used for selection of an object within an image.

The display part 105 is a display device formed from components such as VRAM and a liquid crystal display. The display part 105 displays information such as processing results of the controller 101.

As indicated in FIG. 3, the electrical power meter 71 is arranged in a lead wire used for bringing electrical power of the commercial electrical power system into the residence 10. This electrical power meter 71 measures electrical power supplied from the commercial electrical power system to the residence 10. Also, as shown in FIG. 1, the electrical power meter 71 outputs a measurement signal S1 indicating a value corresponding to the measured electrical power.

In a manner similar to that of the electrical power meter 71, the electrical power meter 72 is also arranged in a lead wire used for bringing electrical power of the commercial electrical power system into the residence 10. This electrical power meter 72 measures electrical power supplied from the residence 10 to the commercial electrical power system. Also, the electrical power meter 72 outputs a measurement signal S2 indicating a value corresponding to the measured electrical power.

The electrical power meter 73 is arranged at an electricity generation terminal of the electricity generation device 20 installed at the residence 10. The electrical power meter 73 measures electrical power generated by the electricity generation device 20 and outputs a measurement signal S3 indicating a value corresponding to the measured electrical power.

The electrical power meters 74 to 84, for example, are arranged at locations such as receptacles connected to electric devices arranged in the living-space rooms R1 to R4 and the shared-use room X1. Also, the electrical power meters 74 to 84 measure electrical power supplied to respective electric devices and output measurement signals S4 to S14 indicating values corresponding to the measured electrical power.

Via the electrical power meters 74, 76, 78, 80 and 83, the energy management system 100 measures electrical power supplied to the lighting devices 31 to 35, that is to say, the electrical power consumed by the lighting devices 31 to 35. Moreover, the electrical power consumed by the air conditioners 41 to 44 is measured by the electrical power meters 75, 77, 79 and 81. Also, the electrical power meters 82 and 84 measure the electrical power consumed by the electrical cooking appliance 51 and the washer-dryer 52.

The gas meter 91 is arranged in the gas line bringing gas to the residence 10. The gas meter 91 measures a quantity of flow of gas supplied to the resident 10. Also, the gas meter 91 outputs a measurement signal S15 indicating a value corresponding to the measured quantity of flow.

The water meter 92 is arranged in a water line bringing water to the residence 10. The water meter 92 measures a quantity of flow of water supplied to the residence 10. Also, the water meter 92 outputs a measurement signal S16 indicating a value corresponding to the measured quantity of flow.

The measurement signals S1 to S14 output from the electrical power meters 71 to 84, the measurement signals S15 output from the gas meter 91, and the measurement signal S16 output from the water meter 92 are received by the interface 106. The controller 101 reads electrical power P1(t) to P14(t) indicated by the measurement signals S1 to S14 received by the interface 106, reads quantities of flow F1(t) and F2(t) indicated by the measurement signals S15 and S16, and stores the read values as a time series in the auxiliary memory 103. Here, "t" is the time the value is stored in the auxiliary memory 103, and Pn(t), F1(t) and F2(t) indicate the electrical power Pn, the quantity of flow F1 and the quantity of flow F2, respectively, at the time t. "n" is an integer ranging from 1 to 14.

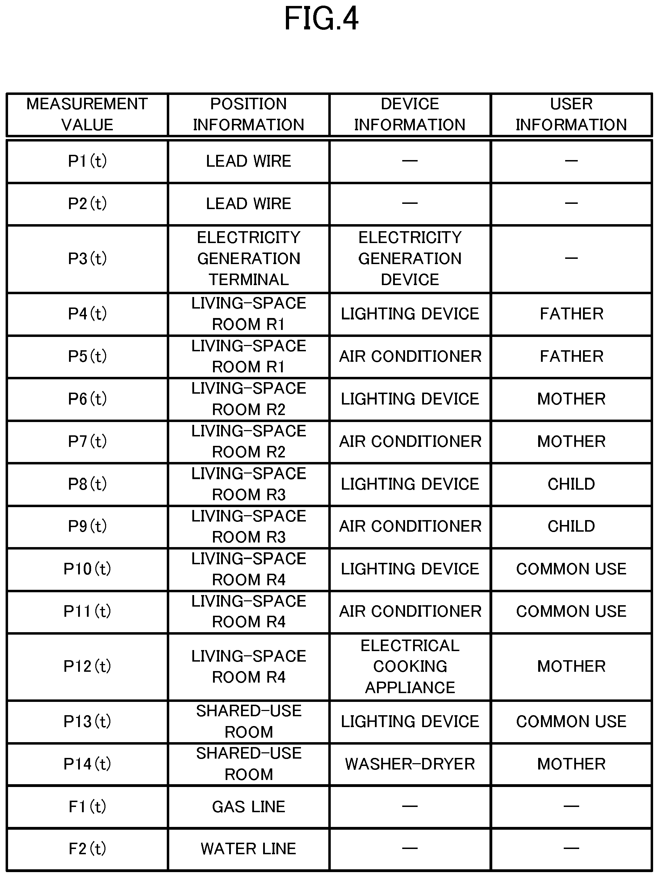

FIG. 4 is a schematic drawing showing the electrical power P1(t) through P14(t) and the quantities of flow F1(t) and F2(t) stored in the auxiliary memory 103. As shown in FIG. 4, the electrical power P1(t) to P14(t) and the like is stored in time-series manner as measurement result information interrelating position information, electric device information, and user information.

The "position information" indicates the location of the subject of measurement of the electrical power meter that outputs the electrical power Pn(t). For example, "lead wire" as the position information indicates that the electrical power P1(t) and P2(t) are each electrical power flowing through a lead wire. Moreover, "electricity generation terminal" as the position information indicates that the electrical power P3(t) is electrical power generated by the electricity generation device 20. Moreover, "living-space room R1" through "living-space room R4" and "shared-use room" as the position information indicate that the electrical power P4(t) through P14(t) are electrical power consumed by the electric devices installed in the living-space room R1 through living-space room R4 and the shared-use room X1, respectively. In the same manner, "gas line" as the position information indicates that the quantity of flow F1(t) is the amount of gas supplied to the residence 10, and "water line" as the position information indicates that the quantity of flow F2(t) is the amount of water supplied to the residence 10.

The "electric device information" indicates the subject of measurement of the electrical power meter that outputs the electrical power Pn(t). For example, "electricity generation device" as the electric device information indicates that the subject of measurement of the electrical power P3(t) is the electricity generation device 20. In the same manner, "lighting device" as the electric device information indicates that the subject of measurement of the electrical power P4(t), P6(t), P8(t), P10(t) and P13(t) is the lighting device 31 through 35, respectively. Also, "air conditioner" as the electric device information indicates that the subject of measurement of the electrical power P5(t), P7(t), P9(t) and P11(t) is the air conditioner 41 through 44, respectively. Moreover, "electrical cooking appliance" as the electric device information indicates that the subject of measurement of the electrical power P12(t) is the electrical cooking appliance 51, and "washer-dryer" as the electric device information indicates that the subject of measurement of the electrical power P14(t) is the washer-dryer 52.

The "user information" indicates the user of the electric device that is the subject of measurement of the electrical power Pn(t). For example, the user information "father" indicates that the father H1 is the user of the lighting device 31 that is the subject of measurement of the electrical power P4(t) and the user of the air conditioner 41 that is the subject of measurement of the electrical power P5(t). The user information "mother" indicates that the mother H2 is the user of the lighting device 32 that is the subject of measurement of the electrical power P6(t), the user of the air conditioner 42 that is the subject of measurement of the electrical power P7(t), the user of the electrical cooking appliance 51 that is the subject of measurement of the electrical power P12(t), and the user of the washer-dryer 52 that is the subject of measurement of the electrical power P14(t). The user information "child" indicates that the child H3 is the user of the lighting device 33 that is the subject of measurement of the electrical power P8(t) and the user of the air conditioner 43 that is the subject of measurement of the electrical power P9(t).

The position information, electric device information and user information are stored by the controller 101 in the auxiliary memory 103. The controller 101 may acquire the position information, electric device information and user information through the interface 106 by communication with the electric devices. Also, the controller 101 may acquire the position information, electric device information and user information from the user through the inputter 104.

Next, operation of the energy management system 100 configured in the above manner is explained. When the energy management system 100 starts to operate, the controller 101 reads from the auxiliary memory 103 the image generation program Pr1 that is used for generation of an image for display on the display part 105.

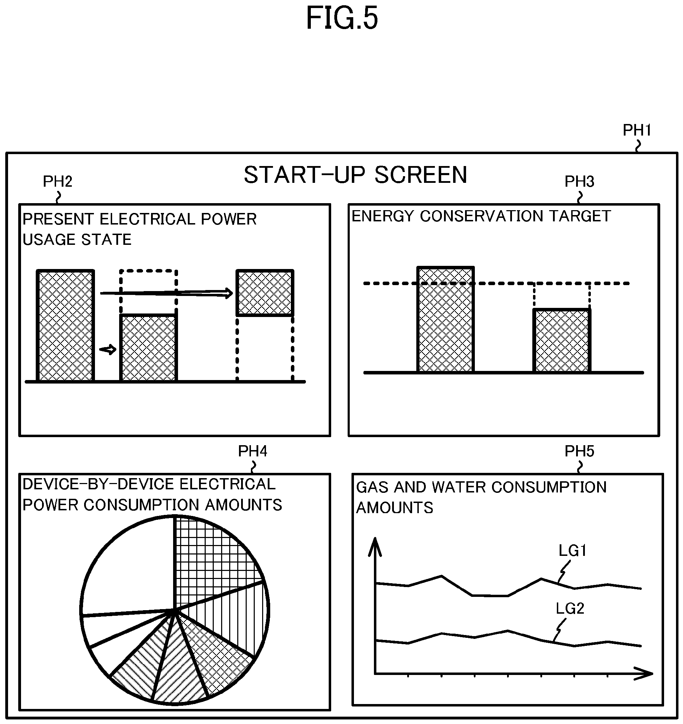

Then the controller 101 initially displays a start-up image PH1 on the display part 105. FIG. 5 is a diagram showing one example of the start-up image PH1. As shown in FIG. 5, a group of transition destinations as images PH2 through PH5 is shown in the start-up image PH1. According to the energy management system 100, an image PH2 showing the present electrical power usage state, an image PH3 showing an energy conservation target, an image PH4 showing electric device-specific electrical energy consumption, and an image PH5 showing consumption amounts of water and gas are shown.

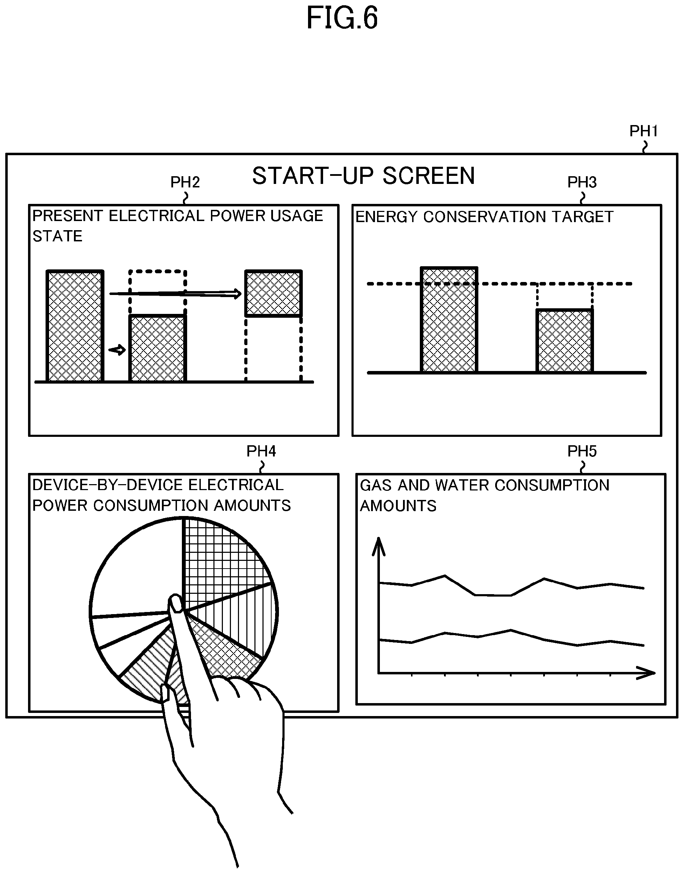

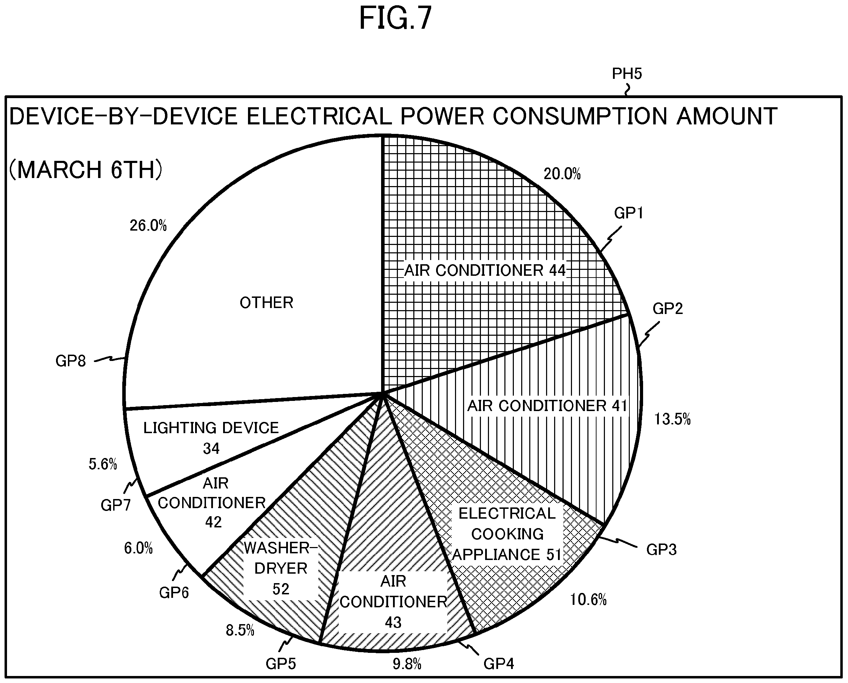

For example, as shown in FIG. 6, when the user touches the image PH4 showing the electric device-specific electrical energy consumption, as shown in FIG. 7, the controller 101 magnifies and displays the image PH4 showing the electric device-specific electrical energy consumption .

A pie chart is shown in the image PH4 showing the electric device-specific electrical energy consumption . This pie chart includes eight pie-slice shaped graphic patterns GP1 to GP8 that indicate electric device-specific electrical energy consumption. According to the pie chart shown in image PH4, surface areas of the graphic patterns GP1 to GP8 indicate the proportions of electrical energy consumption for the respective electric devices. The proportion of electrical energy consumption is obtained by dividing the electrical energy consumption of the electric device by the sum of the electrical energy consumptions of each of the electric devices.

According to the present embodiment, the graphic pattern GP1 indicates the proportion of electrical energy consumption of the electric device that has the largest electrical energy consumption, the graphic pattern GP2 indicates the proportion of electrical energy consumption of the electric device that has the second largest electrical energy consumption, the graphic pattern GP3 indicates the proportion of electrical energy consumption of the electric device that has the third largest electrical energy consumption, the graphic pattern GP4 indicates the proportion of electrical energy consumption of the electric device that has the fourth largest electrical energy consumption, the graphic pattern GP5 indicates the proportion of electrical energy consumption of the electric device that has the fifth largest electrical energy consumption, the graphic pattern GP6 indicates the proportion of electrical energy consumption of the electric device that has the sixth largest electrical energy consumption, and the graphic pattern GP7 indicates the proportion of electrical energy consumption of the electric device that has the seventh largest electrical energy consumption. Moreover, the graphic pattern GP8 indicates the proportion of a sum of the electrical energy consumptions of the electric devices that are of eighth and lower ranking in terms of magnitude of the proportion of electrical energy consumption.

Thus in the image PH4, the proportions of electrical energy consumption by the upper-ranked seven electric devices become displayed (display as a group) so that comparison is possible. For example, based on the pie chart shown in FIG. 7, the electric device that has the greatest electrical energy consumption is the air conditioners 44, and electrical energy consumption can be easily understood to decrease, in order, as that of the air conditioner 41, electrical cooking appliance 51, air conditioner 43, washer-dryer 52, air conditioner 42 and lighting device 34.

The electrical energy consumed by each electric device is calculated by integration of the electrical power P3(t) to P14(t) shown in FIG. 4 over a time range of 24 hours. The controller 101 obtains an electrical energy Ph3 to Ph14 for each of the electric devices based on the electrical power P3(t) to P14(t). Also, the pie chart shown in FIG. 7 is generated by placement, in the screen of the display part 105, of each of the graphic patterns GP1 to GP8 that show the proportions of electrical energy Ph3 to pH14.

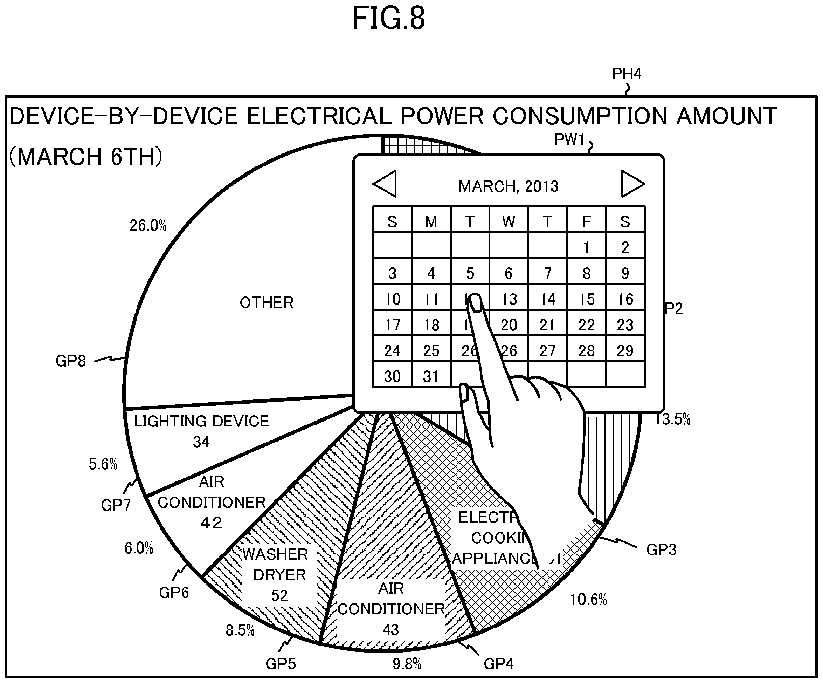

In the present embodiment, the colors of the graphic patterns GP1 to GP8 forming the pie chart are set beforehand, and the graphic patterns GP1 to GP8 are filled by previously determined colors or patterns in order of magnitude. Moreover, although results for March 6th are displayed as one example in FIG. 7, the user is capable of touching text for March 6th within the image as shown in FIG. 8, and causing the display of a pop-up window PW1 that displays a calendar. Also, by selection of this date of the pop-up window PW1, the user is able to cause the display of the pie chart showing results for a desired month and day.

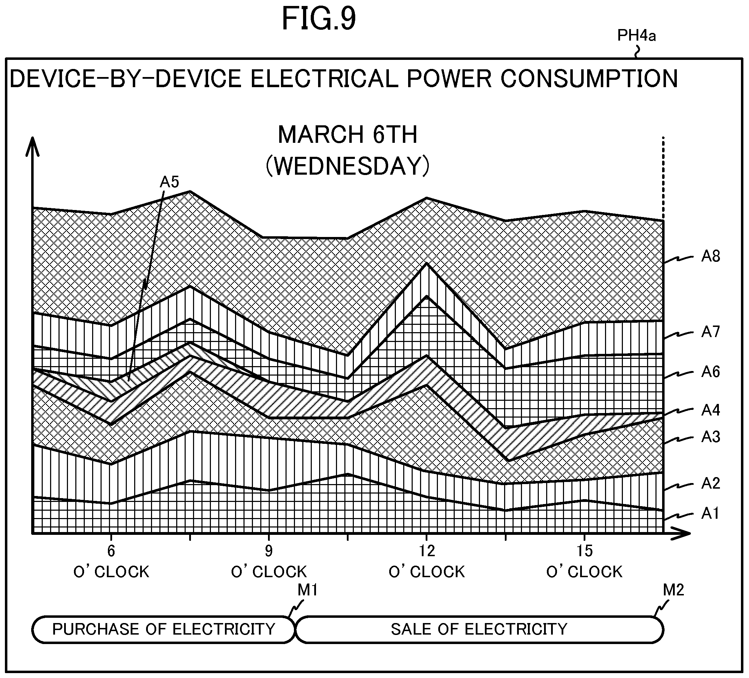

Moreover, by touching the image PH4, the user is able to cause display of the image PH4a shown in FIG. 9 on the display part 105. The image PH4a is a graph showing change of electrical power device-by-device for the electrical devices. In the graph of image PH4a, the areas of the region A1 sandwiched between the horizontal axis and a polygonal line and the regions A2 to A8 sandwiched between respective polygonal lines indicate electrical energy. Moreover, contents of the regions A1 to A8 are based on the contents of the graphic patterns GP1 to GP8 of FIG. 7. Specifically, although the graphic patterns GP1 to GP8 indicate proportions of electrical energy consumption, the regions A1 to A8 indicate the magnitudes of electrical power consumption.

The magnitude of the electrical power consumption of each electric device is indicated by the electrical power P4(t) to P14(t) shown in FIG. 4. Thus the controller 101, based on the electrical power P4(t) to P14(t), generates a graph of the image PH4a. In the energy management system 100, the color or fill pattern of the graphic patterns GP1 to GP8 preferably matches the color or fill patterns of the regions A1 to A8, respectively.

Moreover, in the energy management system 100, the controller 101 compares the electrical power P1(t) and the electrical power P2(t). Also, the controller 101 displays a mark M1 indicating purchase of power during a time interval when the value of the electrical power P1(t) is positive. On the other hand, the controller 101 displays a mark M2 indicating sale of power during a time interval when the value of the electrical power P2(t) is positive.

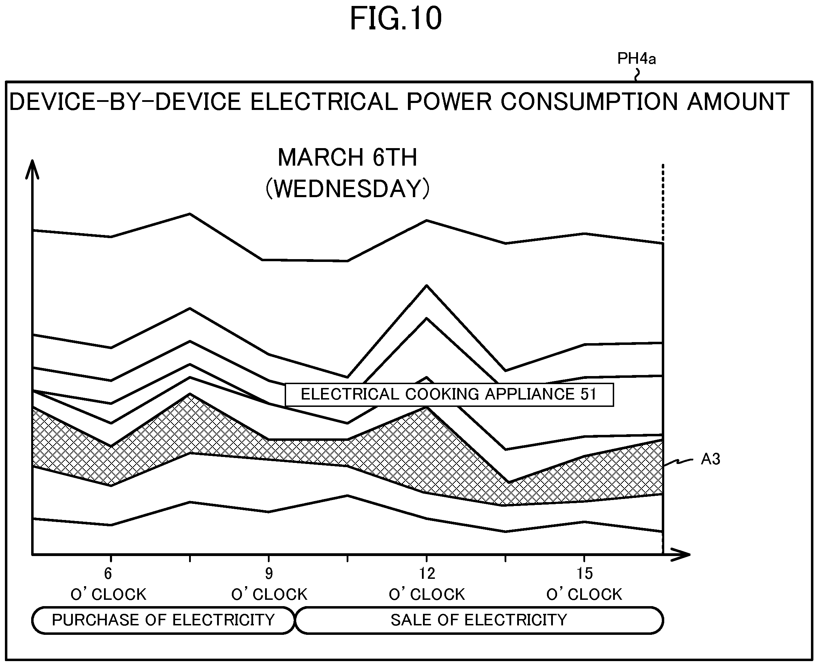

Moreover, when the user touches the regions A1 to A8, as shown in FIG. 10, the touched region is highlighted, and the name of the electric device corresponding to the touched region is displayed by controller 101.

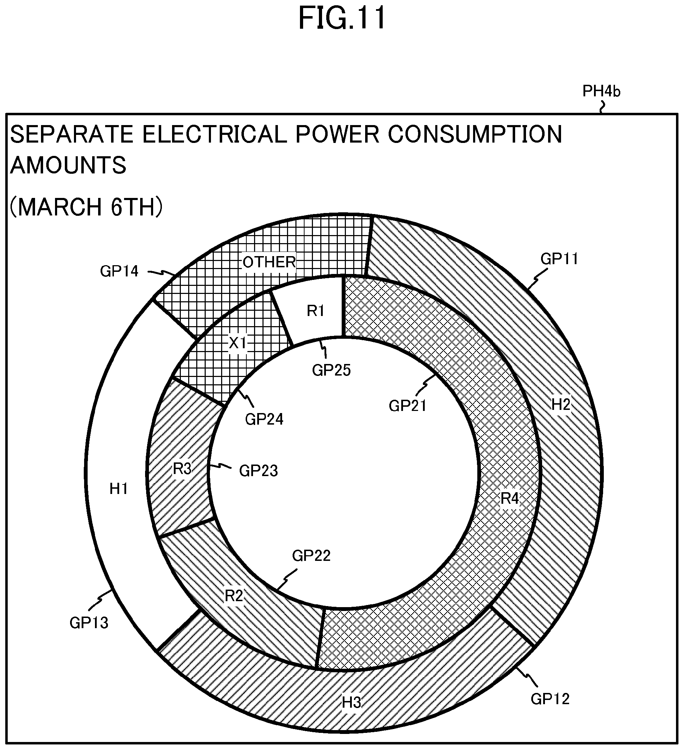

When the image PH4a, showing the electrical power consumption device-by- device for the electrical devices, is touched by the user, as shown in FIG. 11, the controller 101 displays a circular graph showing separately electrical energy consumption. According to this circular graph, the proportions of electrical energy consumption of the electric devices allocated to the father H1, the mother H2 and the child H3 are shown by the graphic patterns GP11 to GP13, and the proportion of electrical energy consumption of the electric devices that is unallocated to any of the father H1, the mother H2 and the child H3 is shown by the graphic pattern GP14. Moreover, using the graphic patterns GP21 to GP25, the proportions are shown of electrical energy consumption occurring in the living-space rooms R1 to R4 and the shared-use room X1.

The electrical energy consumed location-by-location can be calculated by use of the position information of FIG. 4. For example, if the electrical energy consumed in the living-space room R1 is to be calculated, the controller 101 uses the sum of the electrical power P4(t) and the electrical power P5(t), calculates the electrical energy consumed in the living-space room R1, and forms a graphic pattern of a size corresponding to the calculated electrical energy.

The user-by-user electrical power consumption can be calculated using the user information of FIG. 4. For example, when calculating electrical energy consumed by the electric devices allocated to the father H1, the controller 101 uses the sum of the electrical power P4(t) and the electrical power P5(t) to calculate the electrical energy consumed by the father HI, and generates a graphic pattern of a size corresponding to the calculated electrical energy.

Then the controller 101 generates the image PH4b by placement of the graphic patterns GP11 to GP14 and GP21 to GP25, formed in the aforementioned manner, on the screen of the display part 105.

In the present embodiment, the father H1 is the user of the living-space room R1, the mother H2 is the user of the living-space room R2, and the child H3 is the user of the living-space room R3. Thus mutually interrelated graphic patterns GP11 and GP22, mutually interrelated graphic patterns GP12 and GP23, and mutually interrelated graphic patterns GP13 and GP25 are filled using similar type colors or similar type patterns.

When this screen is displayed, the user then touches the region showing text indicating a date, so that the pop-up window PW1 shown in FIG. 8 is displayed, and then by designation of the year, month and day by use of this pop-up window PW1, information of the desired date can be made to display as the image PH4b.

In the energy management system 100, when the image PH4b is touched by the user, the start-up screen shown in FIG. 5 is displayed by the display part 105.

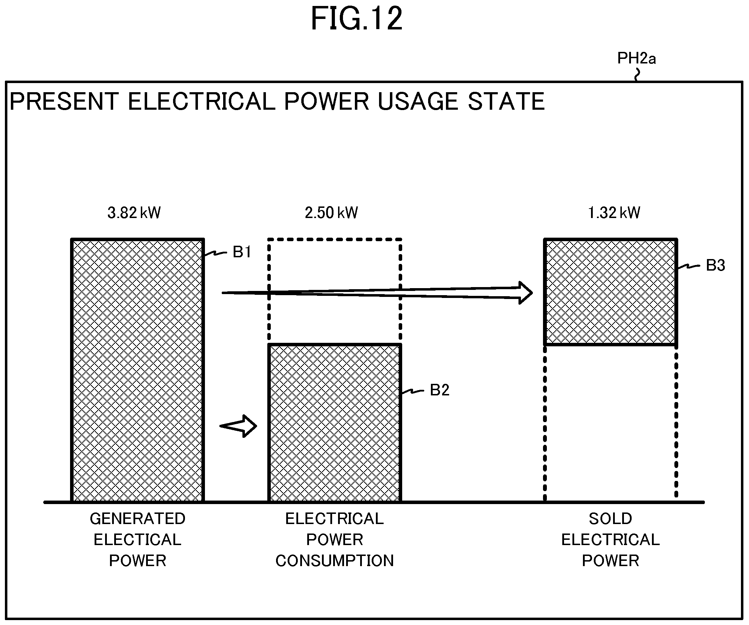

When the start-up image PH1 shown in FIG. 5 is displayed, and then when the user touches the image PH2, the controller 101 magnifies and displays the image PH2 indicating the present electrical power usage state, for example, as shown in FIG. 12. For example, three states, as a state 1, state 2 and state 3, can be considered as present electrical power usage states.

The state 1 is a state in which the electric devices installed in the residence 10 run under electrical power generated by the electricity generation device 20, and there is a sale of electrical power by flow of excess current back to the commercial electrical power system. The state 2 is a state in which the electric devices installed in the residence 10 run using both electrical power from the commercial electrical power system and electrical power generated by the electricity generation device 20. State 3 is a state in which the electric devices installed in the residence 10 are run using electrical power supplied from the commercial electrical power system.

FIG. 12 shows the image PH2a indicating that the present electrical power usage state is in the state 1. As indicated by FIG. 12, the image PH2a includes a graph bar B1 showing generated electrical power, a graph bar B2 showing electrical power consumption, and a graph bar B3 showing sold electrical power. The controller 101 generates the image PH2a by placement, on the screen of the display part 105, the graph bar B1 of a size corresponding to the value of the electrical power P3(t) shown in FIG. 4, the graph bar B3 of a size corresponding to the value of the electrical power P2(t), and the graph bar B2 of a size corresponding to the difference between the electrical power P3(t) and the electrical power P2(t).

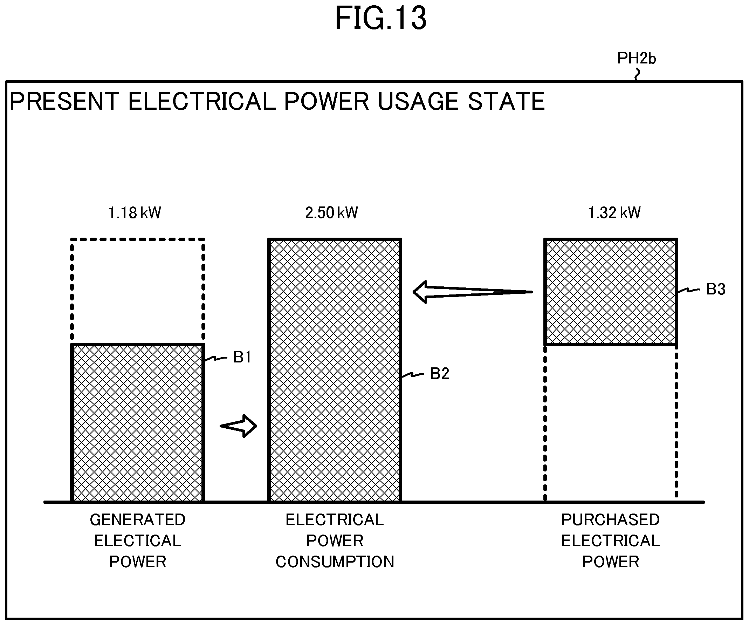

FIG. 13 shows the image PH2b indicating that the present electrical power usage state is the state 2. As indicated by FIG. 13, the image PH2b includes the graph bar B1 indicating generated electrical power, the graph bar B2 indicating electrical power consumption, and the graph bar B3 indicating purchased electrical power. The controller 101 generates the image PH2b by placement, on the screen of the display part 105, the graph bar B1 of a size corresponding to the value of the electrical power P3(t) shown in FIG. 4, the graph bar B3 of a size corresponding to the value of the electrical power P1(t), and the graph bar B2 of a size corresponding to the sum of the electrical power P3(t) and the electrical power P1(t).

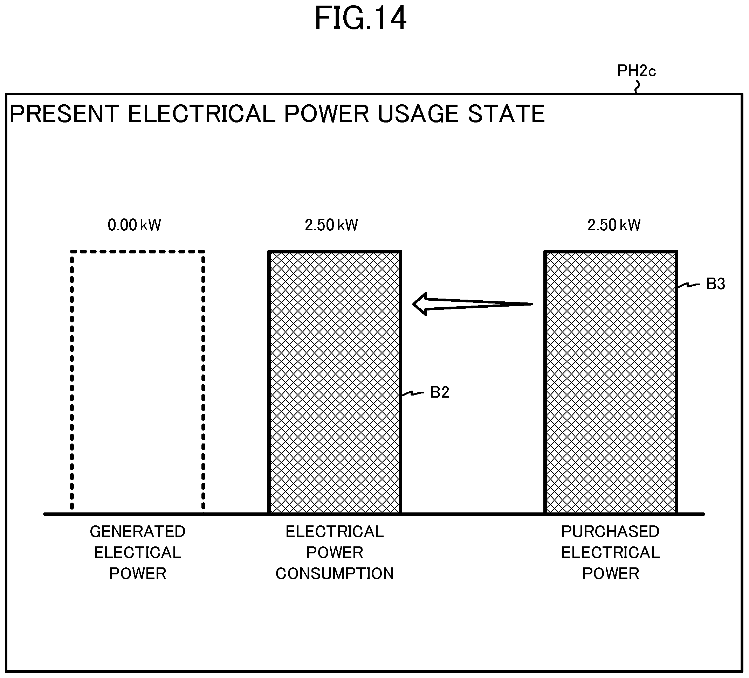

FIG. 14 shows the image PH2c showing that the present electrical power usage state is the state 3. As indicated by FIG. 14, the image PH2c includes the graph bar B2 indicating electrical power consumption, and the graph bar B3 indicating purchased electrical power. The controller 101 generates the image PH2c by placement, on the screen of the display part 105, the graph bars B2 and B3 of sizes corresponding to the value of the electrical power P1(t) shown in FIG. 4.

According to the energy management system 100, when the user touches the images PH2a to PH2c, the start-up screen shown in FIG. 5 is displayed on the display part 105.

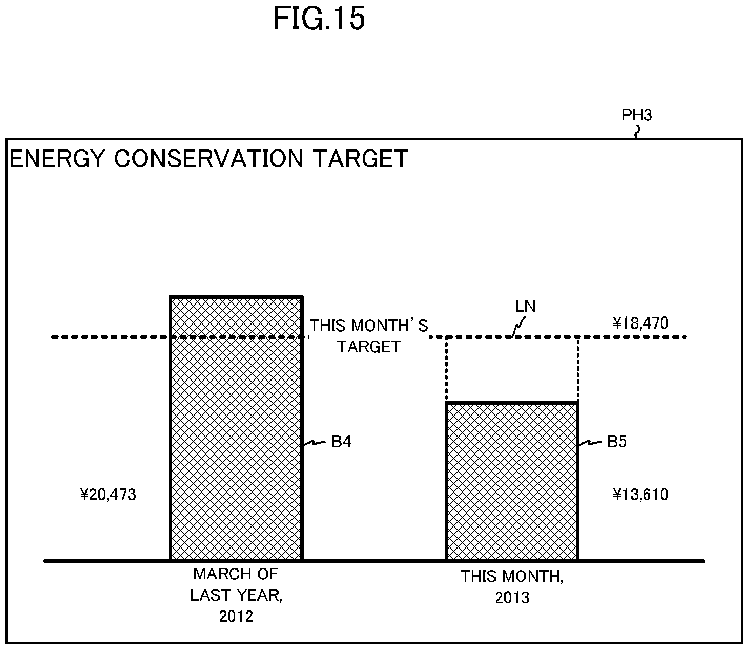

When the start-up image PH1 shown in FIG. 5 is displayed, and then when the user touches the image PH3, the controller 101 magnifies and displays the image PH3 indicating an energy conservation target as shown in FIG. 15. In the image PH3 showing the energy conservation target, for example, a graph bar B4 is shown indicating electrical power consumption per one month of the previous year, a graph bar B5 indicating electrical power consumption of the present month, and a line LN indicating the energy conservation target.

The controller 101 generates the image PH3, for example, by placing on the screen of the display part 105 each of the graph bars B4 and B5 of sizes corresponding to values obtained by multiplying the fee per unit of electrical energy times the integrated value of the electrical power P1(t), and by placing on the screen of the display part 105 the line LN indicating the energy conservation target inputted using the inputter 104.

When this screen is displayed, by touching the region indicating text shown below the graph bars B4 and B5, the user causes the display of the pop-up window PW1 shown in FIG. 8, the user designates a month and year using this pop-up window PW1, and the user can cause display of the graph bars B4 and B5 showing electrical energy consumption of the desired month.

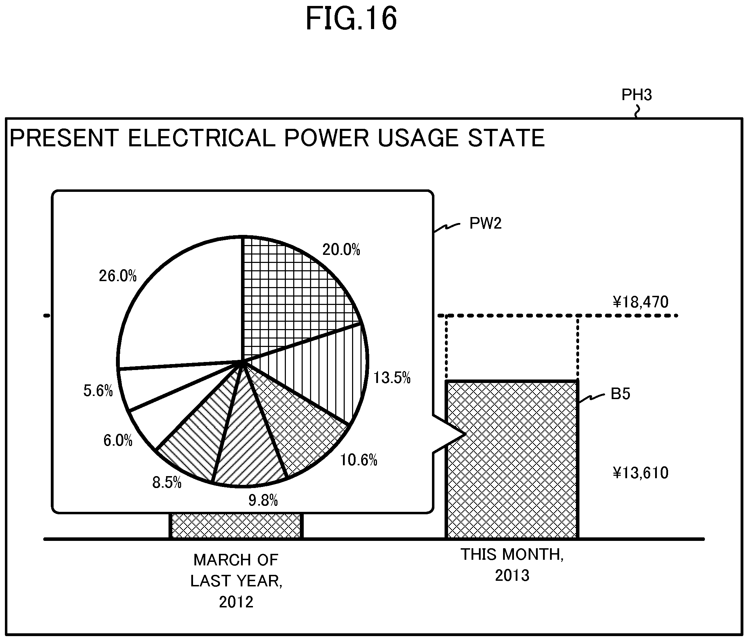

Moreover, when the user touches the graph bars B4 and B5, as shown in FIG. 16, the controller 101 causes display of a pop-up window PW2 showing the pie chart shown in the image PH4 of FIG. 7.

According to the energy management system 100, when the image PH3 is touched by the user, the start-up screen shown in FIG. 5 is displayed on the display part 105.

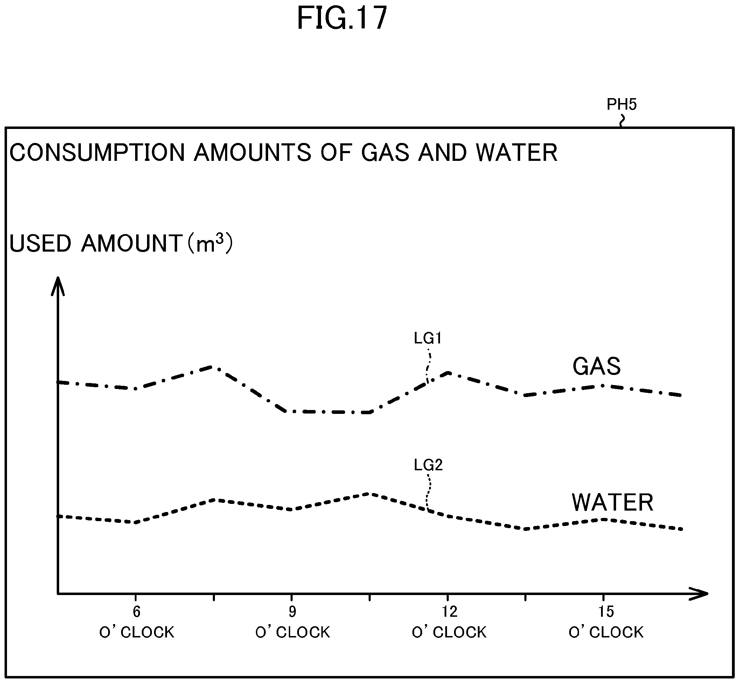

When the start-up image PH1 shown by FIG. 5 is displayed, and then when the image PH5 is touched by the user, as shown by FIG. 17, the controller 101 magnifies and displays the image PH5 that shows trends in the consumption amounts of gas and water. In the image PH5 showing the consumption amounts of gas and water, line graphs LG1 and LG2 are shown indicating time-wise variation in the quantities of flow of gas and water.

The controller 101 generates the image PH5 by placement, on the screen of the display part 105, of the line graph LG1 corresponding to the quantity of flow F1(t) of gas, and the line graph LG2 corresponding to the quantity of flow F2(t) of water.

According to the energy management system 100, when the image PH5 is touched by the user, the start-up screen shown in FIG. 5 is displayed on the display part 105.

As explained above, according to the present embodiment, by the user touching the images PH2 through PH5 constituting the start-up image PH1, the content of accumulated data can be made to display as the images PH2 through PH5 and the like indicating the desired information. Thus by watching each of the images PH2 to PH5 and the like, awareness of each user concerning energy conservation increases, so that an effective reduction in energy consumption can be anticipated for the electric devices installed in the residence 10.

According to the present embodiment, data such as electrical power consumption is displayed device-by-device for the electric devices as shown in the image PH4 of FIG. 7 and the image PH4a of FIG. 9. Thus the user can become easily aware which of the electric devices the energy-conservation procedure is most effective for. Thus energy consumption can be effectively reduced.

According to the present embodiment, as shown in image PH4b of FIG. 11, the electrical energy consumption is displayed room-by-room for the rooms R1 to R4 and X1 of the residence 10. Thus which of the rooms the energy-conservation procedure is most effective for can be easily understood by the user. Thus energy consumption can be effectively reduced.

According to the present embodiment, as shown in image PH4b of FIG. 11, electrical power consumption is displayed user-by-user for users H1, H2 and H3. Thus who the energy-conservation procedure is most effective for can be easily understood by the user. Thus energy consumption can be effectively reduced.

Furthermore, according to the present embodiment, the display device of the present disclosure includes components such as the display part 105, controller 101, main memory 102, auxiliary memory 103 and inputter 104.

Although embodiments of the present disclosure are explained above, the present disclosure is not limited to the various embodiments. For example, the residence 10 is explained above as being partitioned into five rooms, as the living-space rooms R1 to R4 and the shared-use room X1. However, this configuration is not limiting, and the residence 10 may be partitioned into six or more rooms.

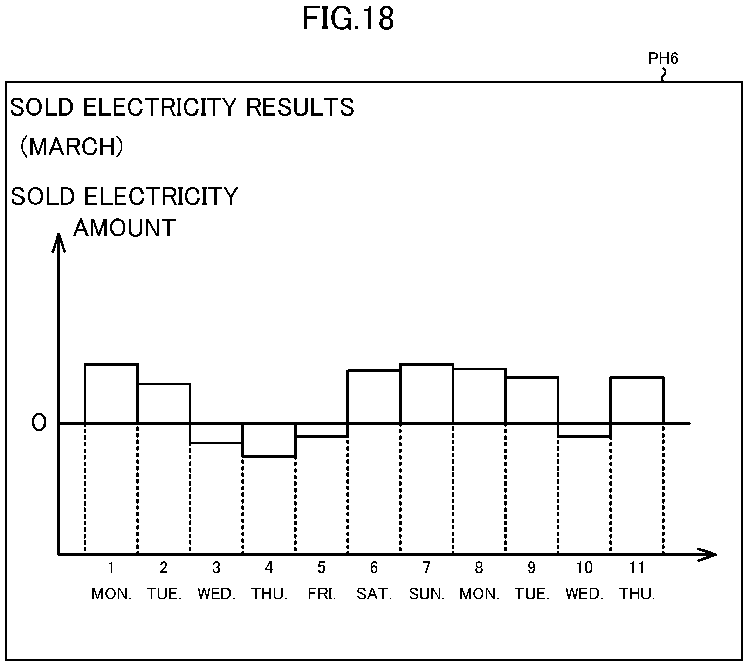

In the above embodiment, when the energy conservation target is set by the user, the controller 101 may display the image PH6 showing electricity sales results, for example, as shown in FIG. 18. Each of the graph bars can be found based on the electrical power P1(t) and the electrical power P2(t), and a graph bar extending downward below a line indicating zero indicates the purchased electrical energy, and a graph bar extending upward above the line indicating zero indicates the sold electrical energy. Due to awareness of the electricity sales results, the user becomes able to accurately set the target for energy conservation.

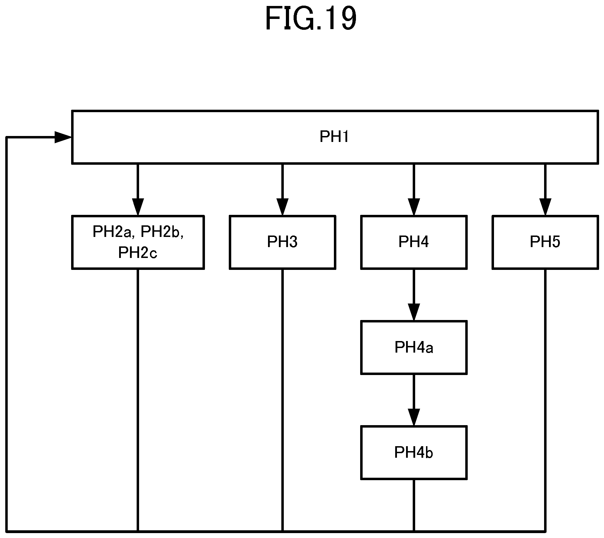

In the above embodiment, as shown in FIG. 19, the image displayed on the display part 105 is explained as transitioning in the order image PH1, image PH2a, image PH2b and image PH2c; or alternatively, transitioning in the order image PH1 and image PH3; or alternatively, transitioning in the order image PH1, image PH4, image PH4a and image PH4b; or alternatively, transitioning in the order image PH1 and image PH5. The order of transitioning of the image displayed on the display part 105 is not limited to that shown in FIG. 19, and the order of transitioning can be set by the user as desired.

According to the above embodiment, the graphic patterns GP1 to GP8 forming the pie or circular graphs shown in figures such as FIG. 7 are arranged in order of the magnitude of area. This configuration is not limiting, and the arranged order may be make configurable based on a command from the user.

In the aforementioned embodiment, as shown in figures such as FIG. 7, even the electrical power consumption of electric devices having low electrical power consumption is displayed by the graphic pattern GP8. This configuration is not limiting, and the controller 101 may display electrical power consumption by a graphic pattern only for electric devices that have particularly high electrical power consumption. Moreover, the same type of color or pattern is preferably used for filling of the graphic patterns concerning electric devices in the same room. Furthermore, the graphic patterns for electric devices in which there is great variation in electrical power consumption may be filled using a special color or pattern.

In the above embodiment, as shown in FIG. 1 and FIG. 3, the electrical power meters 71 to 84 are used to measure the electrical power generated by the electricity generation device 20, the electrical power consumed by the lighting devices 31 to 35, the air conditioners 41 to 44, the electrical cooking appliance 51 and the washer-dryer 52, the electrical power supplied to the residence 10 from the commercial electrical power system, and the like. The present disclosure is not limited to this configuration.

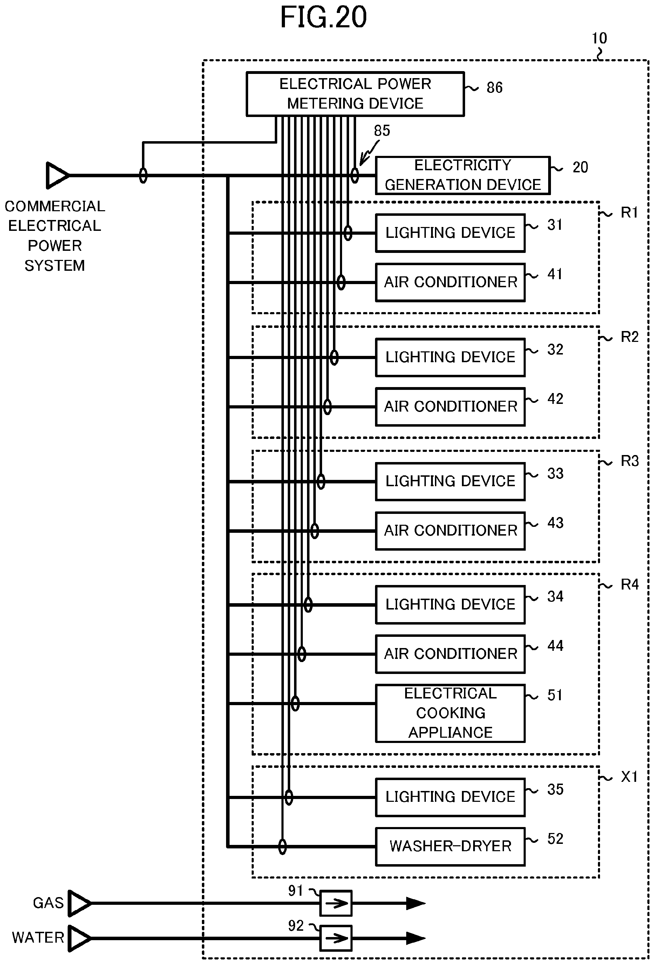

For example, as shown in FIG. 20, an electrical power metering device 86 may be used to measure electrical power consumed by each electric device by using Current Transformers (CTs) 85 arranged in the lead wires of each of the electric devices, such as the electricity generation device 20, lighting devices 31 to 35, air conditioners 41 to 44, the electrical cooking appliance 51, and the washer-dryer 52.

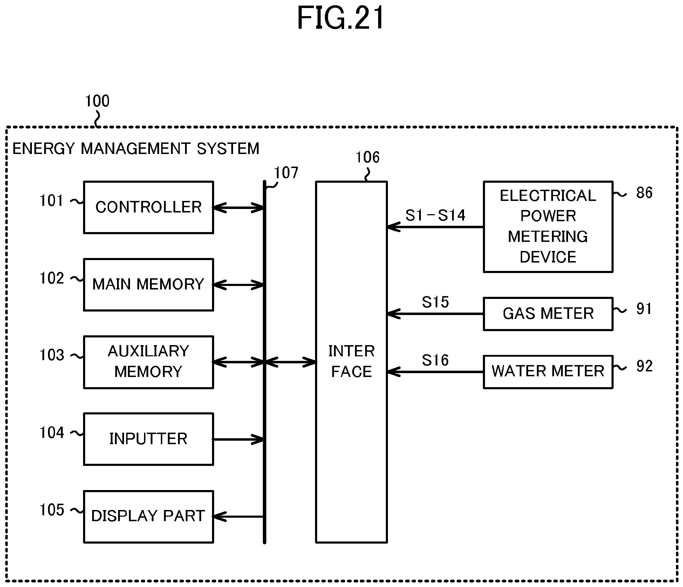

As indicated by FIG. 20, each of the secondary windings of the CTs 85 are connected to the electrical power metering device 86. The electrical power metering device 86 monitors the secondary winding current of each of the CTs 85. As indicated by FIG. 21, measurement signals S1 to S14 indicating electrical power for each of the electric devices are output to an interface 106. Thus the controller 101 of the energy management system 100 can make possible the display, on the display part 105, of the electrical power information for each of the electric devices.

Moreover, the above described means for measurement of electrical power is one example, and for example, if each of the electric devices has a function for measuring the electrical power consumption, the controller 101 may acquire from each electric device information indicating the electrical power measured by the electric device.

According to the above embodiments, the inputter 104 and the display part 105 are included in a GUI. This configuration is not limiting, and the functions of the inputter 104 and the display part 105 may be realized using a communication terminal such as a smart phone.

According to the above embodiments, the lighting devices, air conditioners, the electrical cooking appliance and the washer-dryer are cited as examples of electric devices installed in the residence 10. These examples are not limiting, and electric devices such as an electric hot water heater can be considered as the electric device installed in the residence 10.

The various images PH1 to PH5 and the like in the above embodiment are exemplary, and the present disclosure is not limited to these images.

According to the above embodiments, when touch operation by the user selects an object included in the images PH1 to PH5, the image displayed on the display part 105 changes to a new image according to the selected object.

For example, when images PH2 to PH5 (see FIGS. 5 and 6) included in the start-up image PH1 are selected as an object, the images PH2 to PH5 are magnified and displayed, as in FIGS. 7, 12, 15 and 17. Moreover, when text included in the image is selected as an object, for example, the pop-up window PW1 is displayed for designation of the year, month, and day (see FIG. 8). Furthermore, when the date shown in this pop-up window PW1 is selected as the object, a graph is displayed that relates to the selected date.

Moreover, when a region outside the text in the image PH4 is selected as an object, the image PH4a is displayed (see FIG. 9). In the same manner, when an external part of the image PH4a is selected, the graph changes (see FIG. 11), and when a major part of any of image PH4b, images PH2a through PH2c, image PH3 and image PH5 is selected as an object, the start-up screen is displayed (see FIG. 19).

Moreover, when the region A1 through A8 included in the image PH4a is selected as an object, the selected region is highlighted (see FIG. 10). Also, when the graph bars B4 and B5 included in the image PH3 are selected, the pop-up window PW2 is displayed (see FIG. 16).

However, the objects included in the image are not limited to these objects. For example, the object for changing the image may be an icon indicating information such as an electric device, a user, and a position. The object included in the image may be the image itself.

The functions of the energy management system 100 of the aforementioned embodiment can be realized by use of dedicated hardware or by use of a normal computer.

The image generation program Pr1 stored in the auxiliary memory 103 may be stored and distributed on a computer-readable medium such as a flexible disk, Compact Disk Read-Only Memory (CD-ROM), Digital Versatile Disk (DVD) and Magneto-Optical Disk (MO), and may be installed in a computer.

Moreover, the image generation program Pr1 may normally be stored on an device such as a disk device possessed by a server on a communication network such as the internet, and may be downloaded as required

The foregoing describes some example embodiments for explanatory purposes. Although the foregoing discussion has presented specific embodiments, persons skilled in the art will recognize that changes may be made in form and detail without departing from the broader scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The energy management system of the present disclosure is suitable for management of energy. The display device, display method and program of the present disclosure are suitable for the display of a state of usage of electrical power.

### Reference Signs List

- 10: Residence
- 20: Electricity generation device
- 31-35: Lighting device
- 41-44: Air conditioner
- 51: Electrical cooking appliance
- 52: Washer-dryer
- 71-84: Electrical power meter
- 85: CT
- 86: Electrical power metering device
- 91: Gas meter
- 92: Water meter
- 100: Energy management system
- 101: Controller
- 102: Main memory
- 103: Auxiliary memory
- 104: Inputter
- 105: Display part
- 106: Interface
- 107: System bus
- A1-A8: Region
- B1-B5: Graph bar
- GP1-GP8, GP11-GP14, GP22-GP25: Graphic pattern
- H1: Father
- H2: Mother
- H3: Child
- LG1, LG2: Line graph
- M1, M2: Mark
- PH1-PH6: Image
- PW1, PW2: Pop-up window
- PH2a, PH2b, PH2c, PH4a, PH4b: Image
- R1-R4: Living-space room
- S1-S16: Measurement signal
- X1: Shared-use room

## Claims

1. An energy management system (100), **characterized by** comprising:
a first power meter (71, 72) configured to measure, as first measurement results, electrical power supplied to a residence from a commercial electrical power system;
a second power meter (73) configured to measure, as second measurement results, electrical power generated by a distributed electrical power source (20);
a third power meter (74 to 84) configured to measure, as third measurement results, electrical power supplied to an electric device installed in the residence;
an acquirer (106) configured to acquire the measurement results comprising the first measurement results, the second measurement results, and the third measurement results, and correspondence information indicating a correspondence relationship between the electric device and a user using the electric device;
a selector (104) configured to select an object included in an image displayed on a display device (105); and
a processor (101) configured to display on the display device (105), in a display configuration designated by the user, an image showing the measurement results acquired by the acquirer (106), wherein
the processor (101) is further configured to,
for each selection of the object by the user using the selector (104), change the image displayed on the display device (105) to a new image according to the selected object,
display on the display device (105), as a start-up image, a group of images, for showing the measurement results of electrical power, to be displayed on the display device (105), and
based on the correspondence information, for each user of a plurality of users, display as a group the third measurement results, and
the group of images to be displayed on the display device (105) is a group of images to be magnified and displayed upon selection by the user.

2. The energy management system (100) according to claim 1, **characterized in that**
the processor (101) is further configured to display on the display device (105), as the start-up image, a group of images to be displayed on the display device (105), the group of images including an image showing a present electrical power usage state, an image showing an energy conservation target, an image showing electric device-specific electrical energy consumption, and an image showing a consumed amount of gas and a consumed amount of water.

3. The energy management system (100) according to claim 1 or 2, **characterized in that**
the electric device installed in the residence is one of a plurality of electric devices installed in the residence, and
the processor (101) is further configured to, for each electric device of the plurality of electric devices, display a group of the third measurement results.

4. The energy management system (100) according to any one of claims 1 to 3, **characterized in that**
the acquirer (106) is further configured to acquire position information of the electrical device, and
the processor (101) is further configured to, for each position indicated by the position information, display a group of the third measurement results.

5. The energy management system (100) according to claim 4, **characterized in that**
the processor (101) is further configured to display on the display device (105) the third measurement results as a graph using a type of color specific to the position.

6. The energy management system (100) according to any one of claims 1 to 5, **characterized in that**
the acquirer (106) is further configured to acquire position information indicating a location of the electric device, and
the processor (101) is further configured to display, as a circular graph, a proportion of power consumption per position indicated by the position information relative to a sum of power consumption of the electric device installed in the residence, and a proportion of power consumption per user using the electric device relative to a sum of power consumption of the electric device installed in the residence.

7. The energy management system (100) according to any one of claims 1 o 6, **characterized in that**
the processor (101) is further configured to display on the display device (105) the third measurement results as a graph using a user-specific type of color.

8. The energy management system (100) according to any one of claims 1 to 7, **characterized by** further comprising:
a fourth power meter configured to measure, as fourth measurement results, a consumed amount of water or gas supplied to the residence, wherein
the processor (101) is further configured to display on the display device (105), by a display configuration designated by the user, an image indicating the fourth measurement results.

9. A display device (105) **characterized by** comprising:
a selector (104) configured to select an object included in an image displayed on a display part (105); and
a processor (101) configured to display on the display part (105), using a display configuration designated by a user, an image showing the measurement results comprising:
measurement results of electrical power supplied to a residence from a commercial electrical power system,
measurement results of electrical power generated by a distributed electrical power source (20), and
measurement results of electrical power supplied to an electric device installed in the residence, wherein
the processor (101) is further configured to,
for each selection of the object by the user using the selector (104), change the image displayed on the display part (105) to a new image according to the selected object,
display on the display part (105), as a start-up image, a group of images, for showing the measurement results of electrical power, to be displayed on the display part (105), and
based on correspondence information indicating a correspondence relationship between the electric device and the user using the electric device, for each user of a plurality of users, display as a group the measurement results of electrical power supplied to the electric device, and
the group of images to be displayed on the display part (105) is a group of images to be magnified and displayed upon selection by the user.

10. A display method **characterized by** comprising:
displaying on a display device (105), by a display configuration designated by a user, an image showing measurement results comprising:
measurement results of electrical power supplied to a residence from a commercial electrical power system,
measurement results of electrical power generated by a distributed electrical power source (20), and
measurement results of electrical power supplied to an electric device installed in the residence, wherein
in the displaying
for each selection of an object included in the image by the user, changing the image displayed on the display device (105) to a new image according to the selected object,
displaying on the display device (105), as a start-up image, a group of images, for showing the measurement results of electrical power, to be displayed on the display device (105), and
based on correspondence information indicating a correspondence relationship between the electric device and the user using the electric device, for each user of a plurality of users, displaying as a group the measurement results of electrical power supplied to the electric device, and
the group of images to be displayed is a group of images to be magnified and displayed upon selection by the user.

## Patentansprüche

1. Energieverwaltungssystem (100), **dadurch gekennzeichnet, dass** es umfasst:
einen ersten Leistungsmesser (71, 72), der konfiguriert ist, als erste Messergebnisse elektrische Leistung zu messen, die von einem kommerziellen elektrischen Stromversorgungssystem an eine Wohnstätte geliefert wird;
einen zweiten Leistungsmesser (73), der konfiguriert ist, als zweite Messergebnisse elektrische Leistung zu messen, die von einer verteilten elektrischen Stromquelle (20) erzeugt wird;
einen dritten Leistungsmesser (74 bis 84), der konfiguriert ist, als dritte Messergebnisse elektrische Leistung zu messen, die einer in der Wohnstätte installierten elektrischen Einrichtung zugeführt wird;
einen Erwerber (106), der konfiguriert ist, die Messergebnisse, umfassend die ersten Messergebnisse, die zweiten Messergebnisse und die dritten Messergebnisse, und Entsprechungsinformationen, anzeigend eine Entsprechungsbeziehung zwischen der elektrischen Einrichtung und einem die elektrische Einrichtung benutzenden Benutzer, zu erwerben;
einen Auswähler (104), der konfiguriert ist, ein Objekt auszuwählen, das in einem auf einer Anzeigeeinrichtung (105) angezeigten Bild enthalten ist; und
einen Prozessor (101), der konfiguriert ist, auf der Anzeigeeinrichtung (105) in einer durch den Benutzer bestimmten Anzeigekonfiguration ein Bild, anzeigend die durch den Erwerber (106) erworbenen Messergebnisse, anzuzeigen, wobei
der Prozessor (101) ferner konfiguriert ist,
für jede Auswahl des Objekts durch den Benutzer unter Verwendung des Auswählers (104) das auf der Anzeigeeinrichtung (105) angezeigte Bild in ein neues Bild gemäß dem ausgewählten Objekt zu ändern,
auf der Anzeigeeinrichtung (105), als ein Startbild, eine Gruppe von Bildern anzuzeigen zum Anzeigen der Messergebnisse der elektrischen Leistung, die auf der Anzeigeeinrichtung (105) angezeigt werden soll, und
basierend auf den Entsprechungsinformationen für jeden Benutzer einer Vielzahl von Benutzern die dritten Messergebnisse als eine Gruppe anzuzeigen, und
die Gruppe von Bildern, die auf der Anzeigeeinrichtung (105) angezeigt werden soll, eine Gruppe von Bildern ist, die auf Auswahl durch den Benutzer zu vergrößern und anzuzeigen ist.

2. Energieverwaltungssystem (100) nach Anspruch 1, **dadurch gekennzeichnet, dass**
der Prozessor (101) ferner konfiguriert ist, auf der Anzeigeeinrichtung (105) als das Startbild eine Gruppe von Bildern anzuzeigen, die auf der Anzeigeeinrichtung (105) angezeigt werden soll, wobei die Gruppe von Bildern ein Bild, anzeigend einen aktuellen elektrischen Leistungverbrauchszustand, ein Bild, anzeigend ein Energiesparziel, ein Bild, anzeigend einen für die elektrische Einrichtung spezifischen elektrischen Energieverbrauch, und ein Bild, anzeigend eine verbrauchte Menge an Gas und eine verbrauchte Menge an Wasser, umfasst.

3. Energieverwaltungssystem (100) nach Anspruch 1 oder 2, **dadurch gekennzeichnet, dass**
das die in der Wohnstätte installierte elektrische Einrichtung eine von einer Vielzahl von in der Wohnstätte installierten elektrischen Einrichtungen ist, und
der Prozessor (101) ferner konfiguriert ist, für jede elektrische Einrichtung der Vielzahl von elektrischen Einrichtungen eine Gruppe der dritten Messergebnisse anzuzeigen.

4. Energieverwaltungssystem (100) nach einem der Ansprüche 1 bis 3, **dadurch gekennzeichnet, dass**
der Erwerber (106) ferner konfiguriert ist, Positionsinformationen der elektrischen Einrichtung zu erwerben, und
der Prozessor (101) ferner konfiguriert ist, für jede durch die Positionsinformationen angezeigte Position eine Gruppe der dritten Messergebnisse anzuzeigen.

5. Energieverwaltungssystem (100) nach Anspruch 4, **dadurch gekennzeichnet, dass**
der Prozessor (101) ferner konfiguriert ist, auf der Anzeigeeinrichtung (105) die dritten Messergebnisse als ein Diagramm unter Verwendung eines für die Position spezifischen Farbtyps anzuzeigen.

6. Energieverwaltungssystem (100) nach einem der Ansprüche 1 bis 5, **dadurch gekennzeichnet, dass**
der Erwerber (106) ferner konfiguriert ist, Positionsinformationen, anzeigend einen Standort der elektrischen Einrichtung, zu erwerben, und
der Prozessor (101) ferner konfiguriert ist, als ein Kreisdiagramm einen Anteil des Stromverbrauchs pro Position, angezeigt durch die Positionsinformationen, relativ zu einer Summe des Stromverbrauchs der in der Wohnstätte installierten elektrischen Einrichtung, und einen Anteil des Stromverbrauchs pro Benutzer, der die elektrische Einrichtung benutzt, relativ zu einer Summe des Stromverbrauchs der in der Wohnstätte installierten elektrischen Einrichtung anzuzeigen.

7. Energieverwaltungssystem (100) nach einem der Ansprüche 1 oder 6, **dadurch gekennzeichnet, dass**
der Prozessor (101) ferner konfiguriert ist, auf der Anzeigeeinrichtung (105) die dritten Messergebnisse als ein Diagramm unter Verwendung eines benutzerspezifischen Farbtyps anzuzeigen.

8. Energieverwaltungssystem (100) nach einem der Ansprüche 1 bis 7, **dadurch gekennzeichnet, dass** es ferner umfasst:
einen vierten Leistungmesser, der konfiguriert ist, als vierte Messergebnisse eine der Wohnstätte zur Verfügung gestellte verbrauchte Menge an Wasser oder Gas zu messen, wobei
der Prozessor (101) ferner konfiguriert ist, auf der Anzeigeeinrichtung (105) durch eine durch den Benutzer bestimmte Anzeigekonfiguration ein Bild, anzeigend die vierten Messergebnisse, anzuzeigen.

9. Anzeigeeinrichtung (105), **dadurch gekennzeichnet, dass** sie umfasst:
einen Auswähler (104), der konfiguriert ist, ein Objekt auszuwählen, das in einem auf einem Anzeigeteil (105) angezeigten Bild enthalten ist; und
einen Prozessor (101), der konfiguriert ist, auf dem Anzeigeteil (105) unter Verwendung einer durch einen Benutzer bestimmten Anzeigekonfiguration ein Bild, anzeigend die Messergebnisse, anzuzeigen, umfassend:
Messergebnisse der elektrischen Leistung, die von einem kommerziellen elektrischen Stromversorgungssystem an eine Wohnstätte geliefert wird,
Messergebnisse der durch eine verteilte elektrische Stromquelle (20) erzeugten elektrischen Leistung, und
Messergebnisse der einer in der Wohnstätte installierten elektrischen Einrichtung zugeführten elektrischen Leistung, wobei
der Prozessor (101) ferner konfiguriert ist,
für jede Auswahl des Objekts durch den den Auswähler (104) benutzenden Benutzer das auf dem Anzeigeteil (105) angezeigte Bild gemäß dem ausgewählten Objekt in ein neues Bild zu ändern,
auf dem Anzeigeteil (105) als ein Startbild eine Gruppe von Bildern anzuzeigen, zum Anzeigen der Messergebnisse der elektrischen Leistung, die auf dem Anzeigeteil (105) angezeigt werden soll, und
basierend auf Entsprechungsinformationen, anzeigend eine Entsprechungsbeziehung zwischen der elektrischen Einrichtung und dem die elektrische Einrichtung benutzenden Benutzer, für jeden Benutzer einer Vielzahl von Benutzern, die Messergebnisse der der elektrischen Einrichtung zugeführten elektrischen Leistung als eine Gruppe anzuzeigen, und
wobei die Gruppe von Bildern, die auf dem Anzeigeteil (105) angezeigt werden soll, eine Gruppe von Bildern ist, die auf Auswahl durch den Benutzer zu vergrößern und anzuzeigen ist.

10. Anzeigeverfahren, **dadurch gekennzeichnet, dass** es umfasst:
Anzeigen auf einer Anzeigeeinrichtung (105), durch eine durch einen Benutzer bestimmte Anzeigekonfiguration, eines Bildes, anzeigend Messergebnisse umfassend:
Messergebnisse der elektrischen Leistung, der von einem kommerziellen elektrischen Stromversorgungssystem an eine Wohnstätte geliefert wird,
Messergebnisse der durch eine verteilte elektrische Stromquelle (20) erzeugten elektrischen Leistung, und
Messergebnisse der an eine in der Wohnstätte installierte elektrische Einrichtung gelieferten elektrischen Leistung,
wobei beim Anzeigen
für jede Auswahl eines in dem Bild enthaltenen Objekts durch den Benutzer, Ändern des auf der Anzeigeeinrichtung (105) angezeigten Bildes in ein neues Bild gemäß dem ausgewählten Objekt,
Anzeigen auf der Anzeigeeinrichtung (105), als ein Startbild, einer Gruppe von Bildern zum Anzeigen der Messergebnisse der elektrischen Leistung, die auf der Anzeigeeinrichtung (105) angezeigt werden soll, und
basierend auf Entsprechungsinformationen, anzeigend eine Entsprechungsbeziehung zwischen der elektrischen Einrichtung und dem die elektrischen Einrichtung benutzenden Benutzer, für jeden Benutzer einer Vielzahl von Benutzern Anzeigen der Messergebnisse der elektrischen Leistung, die der elektrischen Einrichtung zugeführt wird, als eine Gruppe, und
wobei die Gruppe der anzuzeigenden Bilder eine Gruppe von Bildern ist, die auf Auswahl durch den Benutzer zu vergrößern und anzuzeigen ist.

## Revendications

1. Système de gestion d'énergie (100), **caractérisé en ce qu'**il comprend :
un premier appareil de mesure de puissance (71, 72) configuré pour mesurer, en tant que premiers résultats de mesure, l'électricité fournie à une résidence par un système d'alimentation électrique secteur ;
un deuxième appareil de mesure de puissance (73) configuré pour mesurer, en tant que deuxièmes résultats de mesure, l'électricité générée par une source d'alimentation électrique répartie (20) ;
un troisième appareil de mesure de puissance (74 à 84) configuré pour mesurer, en tant que troisièmes résultats de mesure, l'électricité fournie à un dispositif électrique installé dans la résidence ;
un dispositif d'acquisition (106) configuré pour acquérir les résultats de mesure comprenant les premiers résultats de mesure, les deuxièmes résultats de mesure, et les troisièmes résultats de mesure, et des informations de correspondance indiquant une relation de correspondance entre le dispositif électrique et un utilisateur utilisant le dispositif électrique ;
un sélecteur (104) configuré pour sélectionner un objet inclus dans une image affichée sur un dispositif d'affichage (105) ; et
un processeur (101) configuré pour afficher, sur le dispositif d'affichage (105), dans une configuration d'affichage désignée par l'utilisateur, une image montrant les résultats de mesure acquis par le dispositif d'acquisition (106), dans lequel
le processeur (101) est en outre configuré pour,
pour chaque sélection de l'objet par l'utilisateur en utilisant le sélecteur (104), remplacer l'image affichée sur le dispositif d'affichage (105) par une nouvelle image conformément à l'objet sélectionné,
afficher, sur le dispositif d'affichage (105), en tant qu'image de début, un groupe d'images, pour montrer les résultats de mesure d'électricité, à afficher sur le dispositif d'affichage (105), et
sur la base des informations de correspondance, pour chaque utilisateur d'une pluralité d'utilisateurs, afficher en tant que groupe les troisièmes résultats de mesure, et
le groupe d'images à afficher sur le dispositif d'affichage (105) est un groupe d'images à agrandir et afficher lors de la sélection par l'utilisateur.

2. Système de gestion d'énergie (100) selon la revendication 1, **caractérisé en ce que**
le processeur (101) est en outre configuré pour afficher, sur le dispositif d'affichage (105), en tant qu'image de début, un groupe d'images à afficher sur le dispositif d'affichage (105), le groupe d'images comprenant une image montrant un état d'utilisation d'électricité actuel, une image montrant une cible d'économie d'énergie, une image montrant une consommation d'énergie électrique spécifique au dispositif électrique, et une image montrant une quantité consommée de gaz et une quantité consommée d'eau.

3. Système de gestion d'énergie (100) selon la revendication 1 ou 2, **caractérisé en ce que**
le dispositif électrique installé dans la résidence est l'un d'une pluralité de dispositifs électriques installés dans la résidence, et
le processeur (101) est en outre configuré pour, pour chaque dispositif électrique de la pluralité de dispositifs électriques, afficher un groupe des troisièmes résultats de mesure.

4. Système de gestion d'énergie (100) selon l'une quelconque des revendications 1 à 3, **caractérisé en ce que**
le dispositif d'acquisition (106) est en outre configuré pour acquérir des informations de position du dispositif électrique, et
le processeur (101) est en outre configuré pour, pour chaque position indiquée par les informations de position, afficher un groupe des troisièmes résultats de mesure.

5. Système de gestion d'énergie (100) selon la revendication 4, **caractérisé en ce que**
le processeur (101) est en outre configuré pour afficher, sur le dispositif d'affichage (105), les troisièmes résultats de mesure en tant que graphe en utilisant un type de couleur spécifique à la position.

6. Système de gestion d'énergie (100) selon l'une quelconque des revendications 1 à 5, **caractérisé en ce que**
le dispositif d'acquisition (106) est en outre configuré pour acquérir des informations de position indiquant un emplacement du dispositif électrique, et
le processeur (101) est en outre configuré pour afficher, en tant que graphe circulaire, une proportion de consommation d'énergie par position indiquée par les informations de position en relation avec une somme d'une consommation d'énergie du dispositif électrique installé dans la résidence, et une proportion d'une consommation d'énergie par utilisateur utilisant le dispositif électrique en relation avec une somme de consommation d'énergie du dispositif électrique installé dans la résidence.

7. Système de gestion d'énergie (100) selon l'une quelconque des revendications 1 à 6, **caractérisé en ce que**
le processeur (101) est en outre configuré pour afficher, sur le dispositif d'affichage (105), les troisièmes résultats de mesure en tant que graphe en utilisant un type de couleur spécifique à l'utilisateur.

8. Système de gestion d'énergie (100) selon l'une quelconque des revendications 1 à 7, **caractérisé en ce qu'**il comprend en outre :
un quatrième appareil de mesure de puissance configuré pour mesurer, en tant que quatrièmes résultats de mesure, une quantité consommée d'eau ou de gaz fourni à la résidence, dans lequel
le processeur (101) est en outre configuré pour afficher, sur le dispositif d'affichage (105), par une configuration d'affichage désignée par l'utilisateur, une image indiquant les quatrièmes résultats de mesure.

9. Dispositif d'affichage (105) **caractérisé en ce qu'**il comprend :
un sélecteur (104) configuré pour sélectionner un objet inclus dans une image affichée sur une partie d'affichage (105) ; et
un processeur (101) configuré pour afficher, sur la partie d'affichage (105), en utilisant une configuration d'affichage désignée par un utilisateur, une image montrant les résultats de mesure comprenant :
les résultats de mesure de l'électricité fournie à une résidence par un système d'alimentation électrique secteur,
les résultats de mesure de l'électricité générée par une source d'alimentation électrique répartie (20), et
les résultats de mesure de l'électricité fournie à un dispositif électrique installé dans la résidence, dans lequel
le processeur (101) est en outre configuré pour,
pour chaque sélection de l'objet par l'utilisateur en utilisant le sélecteur (104), remplacer l'image affichée sur la partie d'affichage (105) par une nouvelle image conformément à l'objet sélectionné,
afficher, sur la partie d'affichage (105), en tant qu'image de début, un groupe d'images, pour montrer les résultats de mesure d'électricité, à afficher sur la partie d'affichage (105), et
sur la base d'informations de correspondance indiquant une relation de correspondance entre le dispositif électrique et l'utilisateur utilisant le dispositif électrique, pour chaque utilisateur d'une pluralité d'utilisateurs, afficher en tant que groupe les résultats de mesure de l'électricité fournie au dispositif électrique, et
le groupe d'images à afficher sur la partie d'affichage (105) est un groupe d'images à agrandir et afficher lors de la sélection par l'utilisateur.

10. Procédé d'affichage **caractérisé en ce qu'**il comprend :
l'affichage, sur un dispositif d'affichage (105), par une configuration d'affichage désignée par un utilisateur, d'une image montrant des résultats de mesure comprenant :
les résultats de mesure de l'électricité fournie à une résidence par un système d'alimentation électrique secteur,
les résultats de mesure de l'électricité générée par une source d'alimentation électrique répartie (20), et
les résultats de mesure de l'électricité fournie à un dispositif électrique installé dans la résidence, dans lequel
dans l'affichage
pour chaque sélection d'un objet inclus dans l'image par l'utilisateur, le remplacement de l'image affichée sur le dispositif d'affichage (105) par une nouvelle image conformément à l'objet sélectionné,
l'affichage, sur le dispositif d'affichage (105), en tant qu'image de début, d'un groupe d'images, pour montrer les résultats de mesure d'électricité, à afficher sur le dispositif d'affichage (105), et
sur la base d'informations de correspondance indiquant une relation de correspondance entre le dispositif électrique et l'utilisateur utilisant le dispositif électrique, pour chaque utilisateur d'une pluralité d'utilisateurs, l'affichage en tant que groupe des résultats de mesure de l'électricité fournie au dispositif électrique, et
le groupe d'images à afficher est un groupe d'images à agrandir et afficher lors de la sélection par l'utilisateur.
